# EUROPÄISCHE PATENTSCHRIFT

(11) **EP 0 626 540 B1**
(45) Veröffentlichungstag und Bekanntmachung des Hinweises auf die Patenterteilung: **04.09.1996**
(21) Anmeldenummer: 94107762.0
(22) Anmeldetag: 19.05.1994
(51) Int. Cl.: F23G 5/24, F23G 5/08, F23G 7/12

(54) **Verfahren und Einrichtung zur Entsorgung unterschiedlich zusammengesetzter Abfallmaterialien**
Method and device for the disposal of variously composed waste materials
Procédé et dispositif pour l'élimentation de déchets de composition variée

(30) Priorität: 24.05.1993 DE 4317145
(43) Veröffentlichungstag der Anmeldung: 30.11.1994
(73) Patentinhaber: FEUSTEL, Hans Ulrich, Dipl.-Ing., D-04179 Leipzig (DE); MALLON, Joachim, Dipl.-Phys., D-04179 Leipzig (DE); SCHAAF, Michael, Dipl.-Krist., D-04179 Leipzig (DE); SCHEIDIG, Klaus, Dr.-Ing., D-04179 Leipzig (DE)
(72) Erfinder: Feustel, Hans Ulrich, Dipl.Ing., 04277 Leipzig (DE); Mallon, Joachim, Dipl. Phys., 04157 Leipzig (DE); Schaaf, Michael Dipl.Krist., 04430 Rückmarsdorf (DE); Scheidig,Klaus, Dr. Ing., 07338 Kaulsdorf (DE)
(74) Vertreter: Manderla, Thomas, Dr.

(56) Entgegenhaltungen:
- EP-A- 0 395 397
- DE-A- 4 030 554
- DE-C- 4 130 416
- US-A- 3 729 298
- US-A- 4 987 840

## Beschreibung

Die Erfindung betrifft ein Verfahren und eine Einrichtung zur Entsorgung unterschiedlich zusammengesetzter Abfallmaterialien, insbesondere von lackiertem und kunststoffbehaftetem und/oder mit Kunststoff und anderen organischen Verbindungen vermischtem eisenmetallischem und/oder nichteisenmetallischem Schrott, in einem koksbeheizten Schachtofen.

Bekannt ist es, daß die Hochtemperaturverfahren zur Abfallentsorgung bei Temperaturen von über 1300 Grad Celsius arbeiten. Die Abfallmaterialien werden hierbei über schmelzflüssige Phasen in eine nicht eluierbare Schlacke und in eine Metallphase sowie mittels integrierter, komplizierter und teurer Anlagen in fast staubfreie, völlig ausgebrannte Abgase zerlegt.

So ist in DE 4 130 416 C1 ein Verfahren zur Entsorgung von Abfallgütern beschrieben, bei dem das unzerkleinerte Entsorgungsgut unter Mitführung vorhandener Flüssigkeitsanteile sowie der Beibehaltung seiner Misch- und Verbundstruktur chargenweise zu Kompaktpaketen komprimiert und unter Aufrechterhaltung der Druckbeaufschlagung formschlüssig in einem auf 100 Grad Celsius beheizten Kanal eingebracht wird und dort so lange in kraftschlüssigem Kontakt mit der Kanalwandung gehalten wird, bis die anfangs vorhandenen Flüssigkeiten verdampfen, innewohnende Rückstellkräfte einzelner Entsorgungsgutkomponenten aufgehoben und mitgeführte organische Bestandteile zumindest teilweise Bindemittelfunktionen übernommen haben, Dieses nunmehr formstrukturstabile brockige Feststoffkonglomerat wird aus dem Kanal ausgedrückt und gelangt in einen über sein gesamtes Volumen auf mindestens 1000 Grad Celsius aufgeheizten Hochtemperaturreaktor. Dort bildet das Feststoffkonglomerat eine konstant gehaltene gasdurchlässige Schüttung bis in Höhe der Eintrittsöffnung des beheizten Kanals. An den Randbereichen der Konglomeratbrocken beginnt sofort die pyrolytische Zersetzung. Im Reaktor werden die Kohlenstoffanteile der Schüttung durch eine geregelte Zugabe von Sauerstoff zu CO₂ verbrannt, welches beim Durchgasen der kohlenstoffhaltigen Schüttung wiederum temperaturabhängig zu CO reduziert wird. Die im Heizkanal aus den flüssigen Bestandteilen des Entsorgungsgutes entstehenden Gase und Dämpfe, beispielsweise Wasserdampf, treten mit erhöhtem Druck in den Reaktor ein und treffen dort auf die Oberfläche der Schüttung bzw. werden durch die thermisch zersetzten und somit über die verkohlten Randbereiche der Konglomeratbrocken geleitet. Auf diese Art und Weise soll in der mindestens 1000 Grad Celsius heißen Beruhigungszone oberhalb.der Schüttung im Reaktor eine Zerstörung bzw. Crackung aller chlorierten C-H-Verbindungen und aller langkettigen C-H-Verbindungen erfolgen. Dieses mindestens 1000 Grad Celsius heiße Synthesegasgemisch wird unmittelbar nach Verlassen des Hochtemperaturreaktors durch Wasserbeaufschlagung einer schockartigen Abkühlung auf unter 100 Grad Celsius unterworfen und anschließend entstaubt. Damit sollen Rückbildungen o. g. C-H-Verbindungen nicht mehr möglich sein. Die bei der Kohlenstoffvergasung und Verbrennung mit Sauerstoff entstehenden Temperaturen bis 2000 Grad Celsius werden zum Aufschmelzen der mineralischen und metallischen Bestandteile des Entsorgungsgutes genutzt. Diese schmelzflüssigen Komponenten werden nach genügend langer Verweilzeit in oxidierender Atmosphäre bis zur vollständigen Homogenisierung und Läuterung der Schmelze getrennt aus dem Reaktor abgezogen und als Industrieprodukte durch Spinn-, Verformungs-, Ausformungs- und/oder Blähverfahren weiter verarbeitet. Das durch die Zerstörung der C-H-Verbindungen im Reaktor entstehende Synthesegas wird durch die apparative Verknüpfung aller Teilaggregate der verfahrensgemäßen Vorrichtung zur Beheizung des Kanals und des Hochtemperaturreaktors, zur Schmelzeaufbereitung bzw. zum Betreiben der Sauerstoffanlage durch Gasmotoren bzw. -turbinen genutzt.

Nachteilig ist, daß neben der komplizierten technischen und technologischen Verkettung aller Teilanlagen dieses Anlagensystems eine thermische Aufbereitung der Entsorgungsprodukte in einem externen Anlagenteil vorgenommen werden muß, wobei insbesondere die Verknüpfung von kontinuierlich ablaufenden Prozeßstufen mit diskontinuierlichem, d.h. chargenweisem Betrieb nachteilig ist.

Durch EP 0 395 397 A2 ist ein Verfahren und eine Vorrichtung zur Behandlung von ausgegrabenen Deponiematerialien in einem plasmabeheizten Kupolofen bekannt. Der plasmabeheizte Kupolofen besteht aus einem mit feuerfestem Material ausgekleideten Schacht, einer am oberen Ende des Schachtes installierten Gattierungsöffnung, die auch als Zentralbeschickung ausgebildet sein kann, einer Nachverbrennungskammer, einem im Bereich der Füllkokssäule (Koksbett) seitlich am Ofenschacht installierten Plasmabrenner mit diversen Gas- und Verbrennungsluftzuführleitungen sowie einer Entnahmevorrichtung für die Schmelze und Schlacke. Zusätzlich hat der Plasmabrenner eine Einrichtung zur Staubinjektion im Bereich seiner Mischkammer und dort eingebunden ebenfalls eine sogenannte Recyclingleitung für einen Teilabzug des Ofengases aus dem oberen Schachtbereich. Die Recyclingleitung ist wiederum mit einer Entstaubungsanlage und einem Förderorgan (Ventilator) verbunden. Dadurch soll es möglich sein, das teilweise abgezogene Ofengas in der Mischkammer des Plasmabrenners einer Nachverbrennung zuzuführen. Die Entsorgungsmaterialien, welche toxische Bestandteile wie Pb-, Ni-, Cr-Verbindungen und Halogene sowie polychlorierte Biphenyle enthalten, werden über die Verbrennung und Verschlackung in der Schmelzzone des Ofens neutralisiert, wobei der wesentliche Energieeintrag für die Verbrennung und Verschlackung über den Plasmabrenner erfolgt. Die beim Abschmelzen der Schüttsäule entstehenden toxischen Gase werden im oberen Schachtbereich unter Vermischung mit über die Gattierungsöffnung eintretender Verbrennungsluft in der schüttungsfreien Nachverbrennungskammer gegebenenfalls mit Hilfe eines Zusatzbrenners vollständig unter Vernichtung der toxischen Bestandteile nachverbrannt und danach einer Gaswirtschaft zugeführt.

Alternativ dazu wird ein Teilstrom des Ofengases aus dem oberen Teil der Schüttsäule abgezogen, entstaubt und der Mischkammer des Plasmabrenners zur Nachverbrennung zugeführt. Der über eine Entstaubungsanlage abgeschiedene Staub dieser Ofengase kann ebenfalls in die Mischkammer des Plasmabrenners injiziert werden. Weiter alternativ wird bei einer Zentralbegichtung gemäß Langzeitkupolofen mit Untergichtabsaugung das Ofengas vollständig abgezogen und einer üblichen Gaswirtschaft (Nachverbrennung, Abwärmenutzung, Entstaubung) zugeführt.

Ziel dieser Varianten ist eine vollständige Zerstörung von Schadstoffen, eine Nachnutzung der Energie der Abgase und eine verbesserte Metallurgie durch Verstärkung der reduzierenden Verhältnisse in der Schmelzzone bei Nutzung der temperaturabhängigen CO-Bildung in der Füllkokssäule (Boudouard-Gleichgewicht: Temperaturerhöhung = verstärkte CO-Bildung). Die Temperaturerhöhung wird definitiv durch den Einsatz der Plasmabrenner-Technik realisiert. Die Plasmaerzeugung selbst ist energieaufwendig und wird über verschiedene bekannte Verfahren umgesetzt. Nachteilig ist weiterhin die aufwendige Regel- und Steuertechnik zum Betreiben des Plasmabrenners und zur Regelung der dem Plasmabrenner zusätzlich zugeführten Ofengase. Außerdem enthält der Teil der Ofengase, der nicht dem Plasmabrenner zur Nachverbrennung zugeführt wird, die bei der Verdampfung bzw. der Zersetzung der Deponiematerialien entstehenden Schadstoffe, die mittels einer komplizierten und teuren Abgasreinigung entsorgt werden müssen.

Der herkömmliche koksbeheizte Schachtofen hat den Nachteil, daß durch die großen Abgasmengen entsprechend große Gasreinigungsanlagen inkl. chemischer und physikalischer Sonderverfahren zur Gasreinigung zu installieren sind. Beispielsweise ist vorgeschlagen worden, die umweltverträgliche Entsorgung der Kupolofenabgase, welche bei der Verhüttung von kunststoffbehaftetem Automobilschrott entstehen, über eine hinter der Brennkammer und dem Abhitzekessel installierten Filteranlage mit saurer und basischer Gaswäsche sowie einem Aktivkoks-Absorber zu realisieren (Fachausschußbericht 0.019/6.0113 des VDEh, Vortrag 9.3 Düsseldorf, April 1992; Bericht über die 11. VDI/VW-Gemeinschaftstagung, Wolfsburg 26. - 28.11.1991). Nachteilig ist, daß die hierbei erforderlichen hohen Investitionen die Produkte durch hohe Kapital- und Betriebskosten belasten.

Demgemäß besteht die Aufgabe der Erfindung darin, ein Verfahren und eine Einrichtung zur Entsorgung unterschiedlich zusammengesetzter Abfallmaterialien, insbesondere von lakkiertem und kunststoffbehaftetem und/oder mit Kunststoffen und anderen organischen Verbindungen vermischtem eisenmetallischem und/oder nichteisenmetallischem Schrott, in einem koksbeheizten Schachtofen zu schaffen, wobei mit geringem Anlagenaufwand und niedrigen Betriebskosten unter Einhaltung von vorgegebenen Umweltgrenzwerten die organische und anorganische Verbindungen enthaltenden Abfallmaterialien verwertet werden.

Erfindungsgemäß wird dies erreicht, indem die eingebrachten Abfallmaterialien im oberen Schachtbereich getrocknet und/oder entgast und/oder vergast werden, die entstehenden staubhaltigen Gase als Kreislaufgas aus dem oberen Schachtbereich vollständig abgezogen und dem Schachtofen im Bereich der Schmelz- und Überhitzungszone vollständig zugeführt und dort mit Sauerstoff verbrannt werden, anschlieβend die glühende Koks- und heiße Schüttsäule durchströmen und das durch die Umsetzung mit Sauerstoff entstehende Überschußgas zwischen Kreislaufgasabsaugöffnung und Schmelz- und Überhitzungszone aus dem Schachtofen austritt. Durch das Kreislaufgasprinzip wird die vollständige Wiederzuführung der Ver- und Entgasungsprodukte der Einsatzmaterialien in den Schachtofen gesichert, und es erfolgt durch die Nutzung der fühlbaren Wärme des Kreislaufgases sowie der latenten Wärme der unverbrannten Kreislaufgasbestandteile ein zusätzlicher Energieeintrag. Ebenfalls führt dies in der aus dem Brennstoff Koks und den aus der Ver- und Entgasung der organischen Einsatzmaterialien stammenden Koksrückstände aufgebauten Schüttsäule durch Wirkung der Bourdouard- und der heterogenen Wassergasreaktion vorteilhafterweise zu einer Verstärkung der reduzierenden Verhältnisse im Schachtofen. Im Ergebnis verringern sich die Abbrandverhältnisse beim Erschmelzen der eisenmetallischen und nichteisenmetallischen Komponenten der Schüttung. Der ent- und vergaste Anteil der organischen Verbindungen setzt sich hauptsächlich aus C-H-Verbindungen unterschiedlichster Bindungsart sowie vergleichsweise geringen Anteilen an Cl- und N-Verbindungen zusammen. Diese Verbindungen werden unter den in der Verbrennungszone im Bereich der Schmelz- und Überhitzungszone herrschenden Temperaturen von über 2000 Grad Celsius aufgespalten und mit Sauerstoff umgesetzt. Dadurch erhöht sich die Gasmenge und der Ofendruck steigt. Über den vollständigen Ersatz des Verbrennungsmittels Luft durch Sauerstoff reduziert sich vorteilhafterweise die üblicherweise bei Verwendung von Luft enstehende Prozeßgasmenge um den Anteil Luftstickstoff.

Das Grundprinzip des erfindungsgemäßen Verfahrens wird aus den am Schachtofenprozeß beteiligten Gasmengen abgeleitet.

Diese sind:
- die bei der Ver- und Entgasung von organischem Material, wie Kunststoffe und Koks, entstehende Gasmenge
- die Kohlenstoff-,Wasserstoff-, Chlor- und Stickstoffmenge aus dem organischen Material, welches teil- bzw. unvergast in die Verbrennungszone gelangt, dort verbrannt und über metallurgische und Schlackebildungsreaktionen gebildet wird
- die im Bereich der Schmelz- und Überhitzungszone eingebrachte Sauerstoffmenge
- die im Kreislauf geführte Prozeßgasmenge, wobei die Temperatur des zu verbrennenden Kreislaufgases größer als der Taupunkt des Kreislaufgases ist
- die Überschußgasmenge
Unter konstanten Betriebsbedingungen sind die pro Zeiteinheit gebildeten bzw. zu- und abgeführten Gasmengen konstant. Alle kohlenstoff- und/oder wasserstoffhaltigen Brennstoffe werden nach der Boudouard- bzw. nach der heterogenen Wassergasreaktion vollständig zu CO, CO₂, H₂ und H₂O umgesetzt. Die Überschußgasmenge wird somit gebildet aus der Summe der bei der Ver- und Entgasung des organischen Materials im Ofenschacht entstehenden Gasmenge, der aus dem teil- bzw. unvergasten organischen Material in die Verbrennungszone gelangenden Kohlenstoff-, Wasserstoff-, Chlor- und Stickstoffmenge und der in die Verbrennungszone eingeblasenen Sauerstoffmenge, reduziert um die im Kreislauf geführte Prozeßgasmenge. Die Vergrößerung der Gasmenge in der Verbrennungszone und in der sich anschließenden Reduktionszone führt somit zu einem Überdruck im Ofenschacht. Das abgeführte Überschußgas besteht infolgedessen überwiegend aus Verbrennungsprodukten. Es wird ofendruckabhängig einer im unteren Schachtbereich nachgeschalteten und durch eine Schockkühlung ergänzten Gaswirtschaft und -reinigungsanlage bzw. der nachgeschalteten Wärmetauschereinrichtung, welche als Nachverbrennungseinrichtung ausgebildet ist, zugeführt.

Durch den ausschließlichen Betrieb mit reinem Sauerstoff als Verbrennungsmittel ist keine technisch-technologische Belastung durch die Förderung des Luftstickstoffes im Prozeß zu verzeichnen. Die im koksbeheizten Schachtofen vorhandene kokshaltige und mit kohlenstoffhaltigen Vergasungsrückständen der mit organischen Abfallmaterialbestandteilen versetzten Schüttsäule wirkt gleichzeitig als Filter für die abgesaugten und als Kreislaufgas in den Ofen im Bereich der Schmelz- und Überhitzungszone wieder zugeführten staubhaltigen Prozeßgase. Durch die Reduzierung der Menge Ofengase im Maße der Absaugung des Überschußgases und durch die ungereinigte Wiederzuführung des Kreislaufgases in den Ofen im Bereich der Schmelz- und Überhitzungszone verringert sich die Staubemission. Die Staubanteile der im Kreislauf geführten Prozeßgase werden im Ofen größtenteils verschlackt.

Mit der erfindungsgemäßen Einrichtung entsprechend dem kennzeichnenden Merkmal des Anspruches 9 ist eine kostengünstige und sichere Entsorgung der Abfallmaterialien gegeben. Die Einrichtung ermöglicht ebenfalls ein unkompliziertes Nachrüsten vorhandener Schachtöfen in metallurgischen oder in abfallstoffverwertenden Betrieben. Als Fördereinrichtung für das Kreislaufgas eignen sich auf Grund der auf Werte unterhalb 300 Grad Celsius einstellbaren Gastemperaturen herkömmliche Lüfter und/oder je nach Erfordernis der Einsatz von Gasstrahlverdichtern. Das Überschußgas kann beispielsweise mit einem Ventilator, der nach der Schockkühlung angeordnet ist, oder mit einem Dampfstrahlverdichter abgezogen werden. Durch die Gestaltung des Düsenbereiches im Ofenmantel als Kalotte wird erreicht, daß sich bereits an der Düsenmündung im Bereich der Schmelz- und Überhitzungszone das Kreislaufgas mit Sauerstoff vermischt und die gewünschte Umsetzung zu CO₂ und Wasserdampf erfolgt. Auf Grund der hohen Flammtemperaturen größer 2000 Grad Celsius beginnt die Dissoziation von CO₂ und H₂O. Diese Komponenten und die Dissoziationsprodukte reagieren entsprechend den thermodynamischen und reaktionskinetischen Verhältnissen im Füllkoks bzw. in der kokshaltigen Schüttsäule des Schachtofens zur gewünschten Ofenatmosphäre unter Freisetzung der notwendigen Energiemenge zum Schmelzen und Überhitzen der metallischen und mineralischen Bestandteile der Schüttsäule.

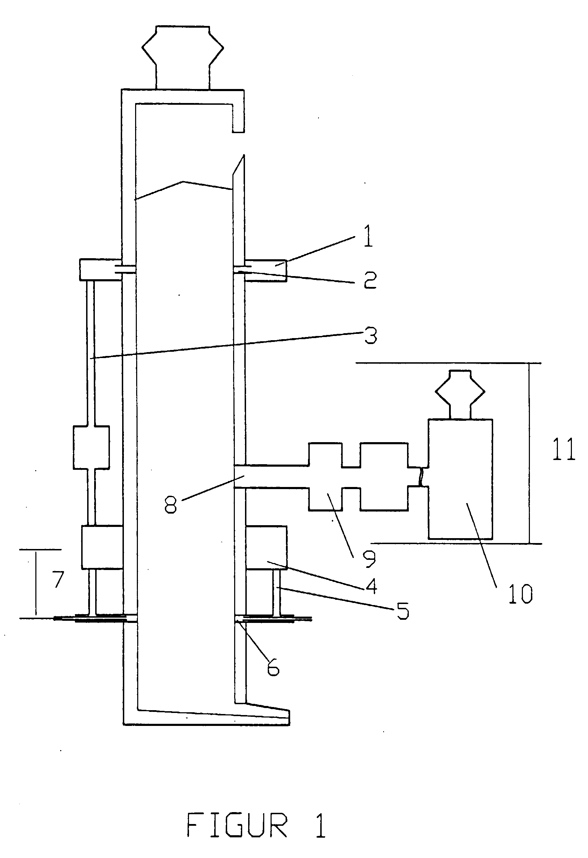

In der zugehörigen Figur 1 ist ein koksbeheizter Schachtofen mit der erfindungsgemäßen Einrichtung im Schnitt dargestellt. Sie zeigt, daß mindestens 500 mm unterhalb der maximalen Schüttsäulenhöhe ein Kreislaufgasabsaugring (1) mit gleichmäßig über den Schachtumfang verteilten Kreislaufgasabsaugöffnungen (2) angeordnet ist, dieser durch eine Kreislaufgasleitung (3) mit einem Kreislaufgasverteilerring (4) verbunden ist, von dem mehrere Stichleitungen (5) zu den im unteren Schachtbereich liegenden Gaszuführungsdüsen (6) reichen und zwischen der Schmelz- und Überhitzungszone (7) und den Kreislaufgasabsaugöffnungen (2) Überschußgasdüsen (8) mit bekannten Einrichtungen, wie einer Gasschockkühlung (9), einer Nachverbrennungseinrichtung (10) mit integriertem Wärmetauscher und Filter, betriebene Überschußgasabsaugung (11) installiert ist.

Am Beispiel der Entsorgung von Altautopaketen soll die Erfindung näher erläutert werden. Die Gattierung besteht aus 100 % Entsorgungsmaterial in Form von Altautopaketen. Das Satzgewicht beträgt 1000 kg. 75 % sind Stahlbleche der Karosse, 12,5 % sind Kunststoffe und 12,5 % sind sonstige nichtmetallische Komponenten. Die Analyse der Kunststoffe ergibt Anteile von CH₂-Verbindungen, von C₂H₃Cl-Verbindungen, von C₈H₈-Verbindungen und von Polystyrol-Verbindungen. Gleichzeitig erfolgt eine Füllkokszugabe und zu jedem Satz die Zugabe des Satzkoksanteils sowie die Zugabe von Kalkstein als Schlackebildner.

Diese Gattierung wandert im Gegenstromprinzip zu den im Ofenschacht nach oben steigenden Prozeßgasen unter Wärmeübertragung vom Gas auf die Schüttsäule der Gattierung nach unten. Die Überhitzung der eisenmetallischen Schmelze und der Schlacke erfolgt in der glühenden Füllkokssäule. Temperaturabhängig erfolgt eine Trocknung, Entgasung, Vergasung, Aufschmelzung und Verschlackung der Gattierungsbestandteile. Über die materialspezifisch ab Temperaturen von 200 °C eintretende Zersetzung der Kunststoffe entsteht ein Gas mit Anteilen von H₂, N₂, O₂, Cl₂ sowie C-H-Verbindungen und C, welches gemeinsam mit dem aus der Koksverbrennung und metallurgischen Reaktionen stammenden Gas als Kreislaufgas über den Kreislaufgasabsaugring (1) abgezogen und über den Kreislaufgaszuführungsring (4) in den Ofen über einen mit Sauerstoff betriebenen Gasstrahlverdichter der Schmelz- und Überhitzungszone des Schachtofens wieder zugeführt wird. Abhängig vom Zersetzungsgrad der Kunststoffe, der vom Oberflächen-Volumenverhältnis beeinflußt wird, wandern mit der Schüttung thermisch unzersetzte Kunststoffanteile in den Bereich der Schmelz- und Überhitzungszone des Schachtofens. Hier tritt eine Verbrennung der Kunststoffreste ein.

Über diese Verbrennung und die Verbrennung der im Kreislauf geführten Prozeßgase erfolgt in der Schmelz- und Überhitzungszone des Schachtofens unter Wirkung des Boudouard- und des heterogenen Wassergas-Gleichgewichtes sowie weiterer metallurgischen Ab- und Zubrandreaktionen letztlich ein Energieeintrag und eine Verstärkung der reduzierenden Bedingungen in der Schüttsäule.

Durch C-Anteil der Kunststoffe werden rd. 630 000 kcal und durch den H₂-Anteil rd. 37 000 kcal in den Schachtofen eingebracht. Insgesamt ergibt sich unter Berücksichtigung der Boudouard- und heterogenen Wassergasreaktion ein Eintrag von rd. 570 000 kcal bei einem C-Verbrauch von rd. 40 kg entsprechend einem Koksverbrauch von rd. 45 kg. Zum Schmelzen und Überhitzen des Stahlschrottes auf 1500 °C werden bei einem energetischen Wirkungsgrad von 30 %, der durch aufzubringende Spaltungsenergien für die Kunststoffe begründet ist, rd. 110 kg Koks benötigt. Somit ergibt sich ein effektiver Schmelzkoksverbrauch von rd. 65 kg/t kS. Der Koksanteil zum Aufkohlen des Stahlschrottes um rd. 3,2 % liegt bei rd. 27 kg/t kS.

Durch den Umsatz mit Sauerstoff entsteht eine Überschußgasmenge von ca. 350 m³/t kS. Diese wird mit 1200 °C über die Überschußgasdüsen (8) abgezogen und einer Schockkühlung über Wassereindüsung zugeführt und danach weiter in die Gaswirtschaft transportiert.

Die Analyse ergibt ohne Berücksichtigung der NO₂-Bildung Anteile von 45,8 % CO₂, 16 % CO, 18 % H₂, 18 % H₂O, 2,2 % N₂ und 0,5 % HCl.

Der Chlorwasserstoffanteil wird ausgewaschen.

Dieses mit rd. 1200 °C aus dem Ofen austretende und einer Schockkühlung zugeführte Überschußgas enthält fühlbare Wärme und latente Wärme, die in der Nachverbrennungseinrichtung (10) mit integriertem Wärmetauscher und Filter nachgenutzt wird.

Durch den Kunststoffeinsatz kann im Umfang der energetischen Umsetzung eine Reduzierung des üblicherweise notwendigen effektiven Schmelzkoksanteils erfolgen.

## Patentansprüche

1. Verfahren zur Entsorgung unterschiedlich zusammengesetzter Abfallmaterialien, insbesondere von lackiertem und kunststoffbehaftetem und/oder mit Kunststoff und anderen organischen Verbindungen vermischtem eisenmetallischem und/oder nichteisenmetallischem Schrott, in einem koksbeheizten Schachtofen, dadurch gekennzeichnet, daß
- die eingebrachten Abfallmaterialien im oberen Schachtbereich entgast und/oder vergast werden,
- die entstehenden staubhaltigen Gase als Kreislaufgas vollständig abgezogen werden,
- dann in der Schmelz- und Überhitzungszone des Ofens mit Sauerstoff verbrannt werden,
- anschließend die glühende Koks- und Schüttsäule durchströmen, und
- das entstehende Überschußgas zwischen Kreislaufgasabsaugöffnung und Schmelz- und Überhitzungszone aus dem Ofen austritt.

2. Verfahren nach Anspruch 1, dadurch gekennzeichnet, daß das Kreislaufgas über eine Fördereinrichtung, beispielsweise einen Radialventilator und/oder einen sauerstoffbetriebenen Gasstrahlverdichter abgezogen wird.

3. Verfahren nach Anspruch 1 und 2, dadurch gekennzeichnet, daß das Überschußgas mit einer Fördereinrichtung, beispielsweise mit einem Ventilator oder einem Dampfstrahlverdichter, abgezogen und einer bekannten Abwärmenutzung, Schockkühlung und Entstaubung zugeführt wird.

4. Verfahren nach Anspruch 1 bis 3, dadurch gekennzeichnet, daß das Überschußgas ofendruckabhängig zugeführt wird.

5. Verfahren nach Anspruch 1 und 2, dadurch gekennzeichnet, daß im Bereich der Schmelz- und Überhitzungszone externe Gasgemische geregelt zugemischt und mit Sauerstoff verbrannt werden.

6. Verfahren nach Anspruch 5, dadurch gekennzeichnet, daß die Gasgemische nicht vollständig ausgebrannte und/oder schadstoffbehaftete Prozeßgase sind.

7. Verfahren nach Anspruch 1 und 2, dadurch gekennzeichnet, daß die Temperatur des zu verbrennenden Kreislaufgases größer als der Taupunkt des Kreislaufgases ist.

8. Verfahren nach Anspruch 1 und 2, dadurch gekennzeichnet, daß im Bereich der Schmelz- und Überhitzungszone Stäube zugesetzt werden.

9. Koksbeheizter Schachtofen zur Durchführung des Verfahrens nach Anspruch 1 bis 8, dadurch gekennzeichnet, daß mindestens 500 mm unterhalb der maximalen Schüttsäulenhöhe ein Kreislaufgasabsaugring (1) mit gleichmäßig über den Schachtumfang verteilten Kreislaufgasabsaugöffnungen (2) angeordnet ist, dieser durch eine Kreislaufgasleitung (3) mit einem Kreislaufgasverteilerring (4) verbunden ist, von dem mehrere Stichleitungen (5) zu den im unteren Schachtbereich liegenden Gaszuführungsdüsen (6) reichen und, daß zwischen dem Kreislaufgasverteilerring (4) und den Kreislaufgasabsaugöffnungen (2) oberhalb der Schmelz und Überhitzungszone, Überschußgasdüsen (8) installiert sind, die mit bekannten Einrichtungen, wie einer Gasschockkühlung (9) sowie Anlagen zur Gasreinigung und Wärmerückgewinnung (10) als Überschußgasabsaugung (11) verbunden sind.

## Claims

1. Process for the disposal of waste materials of variable composition, in particular of painted ferrous metal and/or nonferrous metal scrap with adhering plastic and/or mixed with plastic and other organic compounds, in a coke-heated shaft furnace, characterized in that
- the charged waste materials are degassed and/or gasified in the upper shaft region,
- the resulting dusty gases are taken off completely as circulated gas,
- then burned with oxygen in the melting and superheating zone of the furnace,
- then flow through the red-hot coke and charge column, and
- the resulting excess gas exits from the furnace between circulated gas take-off port and melting and superheating zone.

2. Process according to Claim 1, characterized in that the circulated gas is taken off via a transport device, for example a radial fan and/or an oxygen-driven gas jet compresser.

3. Process according to Claim 1 and 2, characterized in that the excess gas is taken off by a transport device, for example by a fan or a vapour jet compressor, and fed to a known waste heat utilization, shock cooling and dedusting.

4. Process according to Claim 1 to 3, characterized in that the excess gas is fed in a manner dependent on furnace pressure.

5. Process according to Claim 1 and 2, characterized in that, in the area of the melting and superheating zone, external gas mixtures are admixed and burned with oxygen under control.

6. Process according to Claim 5, characterized in that the gas mixtures are incompletely burned and/or pollutant-containing process gases.

7. Process according to Claim 1 and 2, characterized in that the temperature of the circulated gas to be burned is higher than that of the dew point of the circulated gas.

8. Process according to Claim 1 and 2, characterized in that dusts are added in the area of the melting and superheating zone.

9. Coke-heated shaft furnace for carrying out the process according to Claim 1 to 8, characterized in that a circulated gas take-off ring (1) having circulated gas take-off ports (2) uniformly distributed over the shaft periphery is arranged at least 500 mm below the maximum charge column height, this circulated gas take-off ring is connected by a circulated gas line (3) to a circulated gas distributor ring (4), from which a plurality of tapping lines (5) extend to the gas feed nozzle (6) lying in the lower shaft area, and in that excess gas nozzles (8) are installed above the melting and superheating zone between the circulated gas distributor ring (4) and the circulated gas take-off ports (2), which excess gas nozzles are connected to known devices, such as a gas shock cooler (9) and units for gas purification and heat recovery (10) as excess gas extractor (11).

## Revendications

1. Procédé pour l'élimination de matériaux de déchets de compositions différentes, en particulier de mitraille métallique ferreuse et/ou métallique non ferreuse laquée et accolée à de la matière synthétique et/ou mélangée à de la matière synthétique et d'autres composés organiques, dans un four vertical chauffé au coke,
caractérisé en ce que
- les matériaux de déchets introduits dans la zone supérieure du four vertical sont dégazés et/ou gazéifiés,
- les gaz chargés de poussières résultants sont soutirés totalement sous forme de gaz de recyclage,
- puis sont brûlés avec de l'oxygène dans la zone de fusion et de surchauffe du four,
- traversent ensuite la colonne incandescente de coke et de masse en vrac et
- le surplus de gaz produit sort du four entre l'ouverture d'aspiration des gaz de recyclage et la zone de fusion et de surchauffe.

2. Procédé selon la revendication 1,
caractérisé en ce que le gaz de recyclage est soutiré par l'intermédiaire d'un dispositif de transport, par exemple un ventilateur radial et/ou un compresseur à jet de gaz entraîné à l'oxygène.

3. Procédé selon la revendication 1 ou 2,
caractérisé en ce que le surplus de gaz est soutiré par l'intermédiaire d'un dispositif de transport, par exemple avec un ventilateur ou un compresseur à jet de vapeur, et est amené à une utilisation de chaleur perdue connue, à un refroidissement ultrarapide et à un dépoussiérage.

4. Procédé selon la revendication 1 à 3,
caractérisé en ce que le surplus de gaz est amené en dépendance de la pression du four.

5. Procédé selon la revendication 1 et 2,
caractérisé en ce que des mélanges gazeux externes sont ajoutés en mélange régulé dans la zone de fusion et de surchauffe et brûlés avec de l'oxygène.

6. Procédé selon la revendication 5,
caractérisé en ce que les mélanges gazeux sont des gaz de processus industriel non complètement consommés par le feu et/ou non affectés de substances nocives.

7. Procédé selon la revendication 1 et 2,
caractérisé en ce que la température du gaz de recyclage à brûler est supérieure au point de rosée du gaz de recyclage.

8. Procédé selon la revendication 1 et 2,
caractérisé en ce que des poussières sont ajoutées dans la zone de fusion et de surchauffe.

9. Four vertical chauffé au coke pour la mise en oeuvre du procédé selon la revendication 1 à 8,
caractérisé en ce qu'une couronne d'aspiration de gaz de recyclage (1) est disposée au moins 500 mm au-dessous de la hauteur maximale de la colonne de masse en vrac avec des ouvertures d'aspiration de gaz de recyclage (2) réparties uniformément sur la périphérie du four, laquelle est reliée par une conduite de gaz de recyclage (3) à une couronne de distribution de gaz de recyclage (4) de laquelle plusieurs conduites de dérivation (5) arrivent aux buses d'entrée de gaz (6) se trouvant dans la région inférieure du four et que des buses de surplus de gaz (8) sont installées au-dessus de la zone de fusion et de surchauffe, entre la couronne de distribution de gaz de recyclage (4) et les ouvertures d'aspiration de gaz de recyclage (2), lesquelles buses sont reliées à des dispositifs connus tels qu'un refroidissement ultrarapide de gaz (9) ainsi qu'à des installations de nettoyage de gaz et à une récupération de chaleur (10) sous forme d'aspiration de surplus de gaz (11).
